Europäisches Patentamt

European Patent Office

Office européen des brevets

(11) Veröffentlichungsnummer: **0 242 512 B1**

(19)

(12)

# EUROPÄISCHE PATENTSCHRIFT

(45) Veröffentlichungstag der Patentschrift: **20.05.92**

(21) Anmeldenummer: **87101493.2**

(22) Anmeldetag: **04.02.87**

(51) Int. Cl.⁵: **B29C 67/14**, B32B 27/00, C08J 5/00

(54) **Verbundwerkstoffe, Verfahren zu ihrer Herstellung und Verwendung.**

(30) Priorität: **25.04.86 DE 3613990**

(43) Veröffentlichungstag der Anmeldung:
**28.10.87 Patentblatt 87/44**

(45) Bekanntmachung des Hinweises auf die
Patenterteilung:
**20.05.92 Patentblatt 92/21**

(84) Benannte Vertragsstaaten:
**BE CH DE ES FR GB IT LI NL SE**

(56) Entgegenhaltungen:
**EP-A- 0 046 460**
**AU-B- 537 228**
**FR-A- 2 112 337**
**US-A- 3 906 684**
**US-A- 4 543 290**

**JAPANESE PATENT GAZETTE, Sekfion CH,**
**Woche 7903, Klasse A, Nr. 79-04612B, Der-**
**went Publications Ltd, London, GB; & JP-**
**A-53 121 825 (MARUZEN OIL K.K.) 24-10-1978**

**JAPANESE PATENT GAZETTE, Sekfion CH,**
**Woche 8812, Klasse A, Nr. 88-079854, Der-**
**went Publications Ltd, London, GB; & JP-**

**A-60 189 987 (TOSHIBA K.K.) 27-09-1985**

(73) Patentinhaber: **RÜTGERSWERKE AKTIENGE-**
**SELLSCHAFT**
**Mainzer Landstrasse 217**
**W-6000 Frankfurt am Main 1(DE)**

(72) Erfinder: **Jellinek, Karl, Dr.**
**Mörikeweg 1**
**W-5860 Iserlohn-Letmathe(DE)**
Erfinder: **Meier, Bert, Dr.**
**Zedernweg 87**
**W-4230 Wesel(DE)**
Erfinder: **Zehrfeld, Jürgen, Dr.**
**Elisabethstrasse 32**
**W-4223 Voerde 2(DE)**

**Beschreibung**

Die Erfindung betrifft duroplastische Verbundwerkstoffe mit verbessertem Eigenschaftsprofil. Sie haben eine große Bedeutung bei der Herstellung von gewichtseinsparenden Bauteilen, wie sie z. B. in Sandwichbauteilen u. a. von der Luft- und Raumfahrt-, Automobil- und Transportmittelbau-Industrie zur Energieeinsparung, zur Verbesserung der mechanischen Eigenschaften sowie zur Erhöhung der sicherheitstechnischen Anforderungen für das Verkehrswesen verwendet werden.

Die Verbundwerkstoffe bestehen aus mehreren Lagen harzgetränkter Verstärkungsmaterialien, den sogenannten Prepregs, die mittels Presshärtungsverfahren miteinander verbunden werden.

An diese Verbundwerkstoffe werden sehr hohe Anforderungen gestellt hinsichtlich der Eigenschaften wie Festigkeit, Lösungsmittel-, Alterungs- und Witterungsbeständigkeit. Insbesondere wird eine gute Beständigkeit gegen warme Feuchtigkeit, eine erhöhte Flammwidrigkeit und eine geringe Rauchgasdichte gefordert.

Durch Variation der in den Verbundwerkstoffen eingesetzten Verstärkungsmaterialien einerseits und durch Verwendung verschiedener Matrixmaterialien andererseits läßt sich eine Vielzahl verschiedener Verbundwerkstoffe herstellen, die jeweils gute Eigenschaften besitzen (Encyclopedia of Polymer Science and Engineering, Second Edition, Volume 3 (1985), 776 ff). Trotzdem ist kein Verbundwerkstoff bekannt, dessen Eigenschaftsprofil in seiner Gesamtheit den obengenannten Anforderungen entspricht.

Es ist daher die Aufgabe der vorliegenden Erfindung, einen Verbundwerkstoff bereitzustellen, der dem obengenannten Eigenschaftsprofil entspricht.

Die Lösung der Aufgabe erfolgt durch einen Verbundwerkstoff gemäß der Ansprüche 1 bis 5 und ein Verfahren gemäß der Ansprüche 6 und 7. Sie finden Verwendung als Bauteile oder für die Herstellung von Verbundbauteilen für die Luft- und Raumfahrt-, Automobil- und Transportmittelbau-Industrie gemäß der Verwendungsansprüche 8 und 9.

Hochwertige Verbundwerkstoffe haben als Matrixmaterial vorwiegend duroplastische Kunststoffe, bevorzugt Epoxidharze. Epoxidharze zeigen hervorragende Festigkeiten, gute Haftfähigkeit auf allen üblicherweise in hochwertigen Verbundwerkstoffen verwendeten Fasern oder Geweben und eine im Vergleich zu Polyestern oder Phenolharzen geringe Schwindung beim Härtungsprozeß.

Nachteilig sind jedoch die nicht unbeträchtliche Feuchtigkeitsabsorption und Wasserdampfdiffusion sowie das Brandverhalten, insbesondere die Rauchgasdichte und die Toxizität der Rauchgase.

Phenolharze als Matrixmaterialien führen zwar im allgemeinen zu niedrigen mechanischen Fertigkeiten, aber zu geringerer Feuchtigkeitsabsorption und Wasserdampfdiffusion, insbesondere bei warmer Feuchte und zeigen vor allem ein günstigeres Brandverhalten und eine niedrigere Rauchgasdichte von entsprechend geringer Toxizität.

Man hat daher bereits Epoxidharze und Phenolharze miteinander kombiniert eingesetzt, um Leiterplatten für gedruckte Schaltungen mit verbesserten Eigenschaften zu erhalten.

Diese Kombinationen erfolgten entweder dadurch, daß die Verstärkungsmaterialien mit einem Gemisch aus Epoxidharz und Phenolharz und gegebenenfalls einem anderen Polymer imprägniert wurden, wie dies z. B. aus JP 60/18531 A2 (C.A. 103: 7433 x) bekannt ist, oder dadurch, daß die Verstärkungsmaterialien zuerst mit einem Harzsystem und danach mit einem anderen Harzsystem imprägniert wurden, wie dies z. B. in JP 60/189987 A2 (C.A. 104: 51808 t) offenbart ist.

Durch diese Art der Kombinationen von Epoxid- und Phenolharzen wird allerdings die Rauchgasdichte entsprechender Verbundwerkstoffe nicht erniedrigt. Ebenso betrifft die Verbesserung der Feuchtigkeitsaufnahme nur die kalte Feuchte. Das Problem der sogenannten Hot-Wet-Beständigkeit, der Beständigkeit gegen warme Feuchte, ist dadurch nicht gelöst.

Es wurde gefunden, daß sich durch Härtungsverpressung von Prepregs mit Epoxidharzsystemen mit Prepregs mit speziellen Phenolharzsystemen Verbundwerkstoffe herstellen lassen, die einen absolut homogenen Verbund der Prepregs miteinander besitzen und die eine ausgezeichnete Festigkeit zeigen. Als spezielle Phenolharze eignen sich Novolakharze, die mit Hexamethylentetramin oder anderen Umsetzungsprodukten des Formaldehyds mit Stickstoffbasen ausgehärtet werden.

Dies ist für den Fachmann überraschend, denn aufgrund der bekannten unterschiedlichen Schrumpfung der Matrixharze während der Härtung und der unterschiedlichen Härtungsmechanismen waren die Festigkeit vermindernde Störungen des Verbundes in den Grenzschichten der unterschiedlichen Prepregs zueinander zu erwarten.

Außerdem war zu erwarten, daß Mischungen von Epoxidharz-/Härter-/Beschleunigersystemen und Phenolharz-/Härter-/Beschleunigersystemen wegen bestimmter Konkurrenzreaktionen und einer ausgeprägten Polymerunverträglichkeit in der Grenzfläche der verschiedenen vorimprägnierten Gewebelagen nicht zu einem homogenen, hochmolekularen Netzwerk aushärten. So führt die Verpressung von faserverstärkten

2

Epoxidharz-Prepregs mit faserverstärkten, mit Phenolresolen vorimprägnierten Bahnen wegen Unverträglichkeiten und Konkurrenzreaktionen bei der Verpressung nicht zu einem innigen Verbund, sondern zu blasenhaltigen Verbunden mit geringer interlaminarer Scherfestigkeit und schlechter Lagenbindung.

Ferner wurde gefunden, daß die Verbundwerkstoffe aus Epoxidharz-Prepregs und Novolak-Prepregs weitere verbesserte Eigenschaften erhalten, wenn sie so aufgebaut sind, daß die Epoxid-Prepregs sich zwischen Novolak-Prepregs befinden, so daß die Novolak-Prepregs immer die obere und die untere Deckschicht bilden. Derartige Verbundwerkstoffe sind schwer entflammbar, haben eine überraschend niedrige Rauchgasdichte und ebenso überraschend eine ausgezeichnete Beständigkeit gegen warme Feuchte. Da sie zudem eine gute Witterungs-, Alterungs- und Chemikalienbeständigkeit haben, zeigen sie ein Gesamteigenschaftsprofil, das den anfangs genannten Forderungen entspricht.

Als erfindungsgemäß zu verwendende Epoxidharzsysteme eignen sich alle Epoxidharze auf Basis von Umsetzungsprodukten des Epichlorhydrins mit Bisphenol A, Bisphenol F, höherfunktionellen Novolaken von Phenol, Kresolen, Xylenolen und längerkettigen Alkylphenolen, wie z. B. p-tert.-Butylphenol oder Nonylphenol, ferner mit Tris-1,3,3-hydroxyphenylpropan, Tetrakishydroxyphenylethan, Resorcin, Hydrochinon, Brenzkatechin, Chloroglucin, Pyrrogallol, Tris-1,1,1-(hydroxyphenyl)methan und o-,m-,p-Aminophenol in Verbindung mit den in der Praxis zur Prepregherstellung allgemein verwendeten Härtungsmitteln, z. B. Dicyandiamid, Guanidine, Guanamine, Guanamide, Diaminodiphenylsulfon, Diaminodiphenylmethan, m-Phenylendiamin oder 1,3-Propylen-bis(4-aminobenzoat) sowie gegebenenfalls Beschleuniger z. B. Benzyldimethylamin oder Imidazolderivate.

Phenolharzsysteme im Sinne der Erfindung sind Phenolnovolakharze in Verbindung mit Hexamethylentetramin bzw. anderen Umsetzungsprodukten von Formaldehyd mit Stickstoffbasen als Härtungsmittel. Bevorzugtes Härtungsmittel ist Hexamethylentetramin. Als Phenolnovolakharze eignen sich alle Kondensationsprodukte, die aus Phenol, Kresolen, Xylenolen und Alkylphenolen mit Formaldehyd im Molverhältnis von 1 : 0,25 bis 1 : 0,98 unter Verwendung von sauren Katalysatoren, z. B. Salzsäure, Schwefelsäure, Phosphorsäure oder auch organische Säuren, wie Oxalsäure, Maleinsäure und Fumarsäure, kondensiert wurden. Die verwendeten Novolakharze weisen mittlere Molekulargewichte von 200 - 2000, vorzugsweise 300 - 1000 auf. Als Härter und Katalysatoren für die Novolakharz-Härtung sowie die chemische Verknüpfung mit den Epoxid-Prepregsystemen eignen sich besonders Hexamethylentetramin bzw. andere Umsetzungsprodukte von Formaldehyd und Stickstoffbasen, z. B. Anhydroformaldehyd-Anilin oder ähnliche Schiff'sche Basen. Der Zusatz von Hexamethylentetramin bzw. der genannten Schiff'schen Basen liegt vorzugsweise bei 2 -18 %. Die mechanischen Eigenschaftswerte der Faserverbundwerkstoffe können noch weiter verbessert werden, insbesondere in Bezug auf die Flexibilität der Matrix, wenn den Phenolnovolakharzen bzw. den Epoxidharzen in Mengen von 2 - 20 Gew.-% verträgliche Synthese-Kautschuke, z. B. Polyacrylnitril-butadien-Kautschuke, Polyacrylelastomere, vorzugsweise mit reaktiven Endgruppen oder thermoplastische Schlagzähemacher-Additive, z. B. Polyester, Polyacrylate, Polyamide, Polysulfone, Polyethersulfone, Polyetherimide oder Polyetherketone, zugesetzt werden.

Verstärkungsmaterialien sind lose Fasermischungen, Fasermatten oder -vliese, sowie Gewebe oder Rovings auf der Basis hochwertiger Faserrohstoffe wie z. B. Glas-, Keramik-, Bor-, Kohlenstoff-, Aramidoder Phenolharzfasern.

Die Verstärkungsmaterialien werden in an sich bekannter Weise mit den Harzsystemen imprägniert, entweder durch Tränkung oder Beschichtung mit flüssigen Harzsystemen oder mit Lösungen fester Harzsysteme und darauffolgendem Abdunsten der Lösemittel.

Während mit üblichen Phenolresolen beschichtete Gewebe eine hohe Sprödigkeit und Steifigkeit besitzen, sowie schmelzrheologische Eigenschaften, die eine Verarbeitung zusammen mit Epoxy-Klebeprepregs zu geformten Verbundbauteilen nicht zulassen, besitzen die erfindungsgemäßen Phenolharzprepregs eine gute Drapierbarkeit bei Raumtemperatur. Sie lassen sich als flächige Zuschnitte mit entsprechenden Prepregs des gleichen oder anderen Harztyps oder des gleichen oder anderen Verstärkungsmaterials zusammenlegen und bei höherer Temperatur und bei üblichen Drücken in etwa 30 min zu hochwertigen Verbundwerkstoffen verpressen.

Die Temperatur bei der Verpressung wird so gewählt, daß sie oberhalb, bevorzugt 10 bis 20 °C oberhalb der Härtungstemperatur des Harzsystems mit der höchsten Härtungstemperatur liegt. Je nach Harzsystem ergibt sich dann eine Verpressungstemperatur im Bereich von 80 bis 250 °C. Erhalten werden Verbundwerkstoffe mit hervorragenden mechanischen und interlaminaren Scherfestigkeiten sowie einer bisher nicht erreichten hohen Lagenbindung und außergewöhnlich guter Beständigkeit gegenüber der Einwirkung von Feuchtigkeit und Wärme.

Die erfindungsgemäß durch Coverpressung von Epoxidharz- und Novolakharzprepregs hergestellten Verbundwerkstoffe können entweder direkt als Bauteile für die Luft- und Raumfahrt-, Automobil- und Transportmittelbau-Industrie eingesetzt werden, sie können aber auch in Kombination mit Leichtbaustoffen, wie z. B. Aluminium- oder Nomex-Waben, zur Herstellung von Verbundbauteilen (Sandwichbauteilen) verwendet werden. Bei dieser Anwendung in Kernverbunden, z. B. bei der Applikation auf Wabenkerne, werden die Epoxidharzprepregs zur Wabe hin gelegt, um durch kontrollierte Meniskenausbildung eine gute Anbindung an die Wabenstange zu sichern. Darauf folgen auf beiden Flachseiten ein oder mehrere Phenolharzprepregs.

Sowohl die einfachen Verbundwerkstoffe als auch Kernverbunde zeigen eine geringere Wasseraufnahme als Verbunde auf der Basis von Epoxidharzprepregs alleine und überraschend auch eine bisher von Epoxidharzen und Phenolharzen nicht erreichbare Resistenz gegen feuchte Wärme (Hot-Wet-Beständigkeit).

Beispiele

Beispiel 1

350 g einer 70%igen methanolischen Lösung eines Novolaks (Molverhältnis Phenol: $CH_2O$ von 1 : 0,85) werden 33,4 g Hexamethylentetramin zugesetzt. Mit dieser Lösung wird ein Gewebe aus Glas- oder Kohlenstoffasern imprägniert. Dazu wird das Gewebe mit der Harzlösung getränkt und bei einer Temperatur von 105 - 115 °C im Luftstrom ca. 5 min getrocknet. Das Prepreg hat dann bei einem Harzgehalt von 45 - 50 % einen Fluß zwischen 25 - 35 % und einen Gehalt an flüchtigen Bestandteilen von 4 - 6 %. Die Messung der Fließeinheit der Prepregs erfolgte nach der deutschen Airbus-Norm DAN 406.

So hergestellte Prepregs werden zusammen mit handelsüblichen Epoxidharzprepregs (Harz: modifizierte Bisphenol A/Bisphenol F-Epoxidharzformulierung mit einer Viskosität bei 25 °C von 650 mPa . s, einem Feststoffgehalt von 74 % und einem Epoxidäquivalent (Feststoff) von 315 g/äquiv. Entsprechendes Harz ist unter der Bezeichnung Rütapox ® 0146/LS 82 im Handel, Härter: Dicyandiamid) bei 155 °C 30 min lang verpreßt, wobei das Epoxidharz-Prepreg-Gelege auf der Ober- und Unterseite mit Phenolharzprepregs beplankt ist. Die Aufheizzeit von RT auf Preßtemperatur beträgt mehr als 40 min.

Beispiel 2

Ein Verbundwerkstoff, hergestellt aus 3 Lagen des gemäß Beispiel 1 enthaltenen Phenolharzprepregs, 2 Lagen des obigen Epoxidharzprepregs und wiederum 3 Lagen des Phenolharzprepregs, jeweils auf Glasgewebe mit dem Flächengewicht von 286 g/m², durch Verpressen unter einem Druck von 0,1 - 0,5

$N/mm^2$ (1 - 5 bar) während 30 min bei 155 °C ergibt folgende mechanische Werte in Abhängigkeit von der Temperatur und Lagerung in heißem Wasser:

Dicke 2 mm

|  | Meßtemperatur | Einheit | Wert | $H_2O$-Aufnahme |
|---|---|---|---|---|
| Biegefestigkeiten | RT | $N/mm^2$ | 650 | - |
|  | 50 °C | $N/mm^2$ | 645 | - |
|  | 80 °C | $N/mm^2$ | 410 | - |
| Biegefestigkeiten nach Konditionierung bei: |  |  |  |  |
| 1 h $H_2O$-Lagerung 100 °C | 50 °C | $N/mm^2$ | 530 | 0,19 % |
| 4 h $H_2O$-Lagerung 80 °C | 50 °C | $N/mm^2$ | 540 | 0,19 % |
| 8 h $H_2O$-Lagerung 80 °C | 50 °C | $N/mm^2$ | 540 | 0,24 % |

Beispiel 3

Eine 2 mm Verbundwerkstoffplatte, hergestellt aus 2 Lagen Phenolharzprepreg, 3 Lagen Epoxidharzprepreg und wiederum 2 Lagen Phenolharzprepreg, wobei die jeweiligen Harze denen des Beispiels 1 entsprechen, jeweils auf Kohlenstoffasergewebe mit einem Flächengewicht von 245 $g/m^2$ durch Verpressen

unter einem Druck von 0,1 - 0,5 N/mm² (1 - 5 bar) bei 155 °C während 30 min zeigt folgende mechanische Werte in Abhängigkeit von Temperatur und Lagerung in heißem Wasser:

Dicke 2 mm

| | Meßtem-peratur | Einheit | Wert | H$_2$O-Aufnahme |
|---|---|---|---|---|
| Biegefestigkeiten | RT | N/mm$^2$ | 680 | - |
| | 50 °C | N/mm$^2$ | 650 | - |
| | 80 °C | N/mm$^2$ | 530 | - |
| interlaminare Scherfestigkeiten | RT | N/mm$^2$ | 56 | - |
| | 50 °C | N/mm$^2$ | 51 | - |
| | 80 °C | N/mm$^2$ | 35 | - |
| Biegefestigkeiten nach Konditionierung bei: | | | | |
| 1 h H$_2$O-Lagerung 100 °C | 80 °C | N/mm$^2$ | 435 | 0,39 % |
| 4 h H$_2$O-Lagerung 80 °C | 80 °C | N/mm$^2$ | 499 | 0,40 % |
| 8 h H$_2$O-Lagerung 80 °C | 80 °C | N/mm$^2$ | 436 | 0,54 % |

Beispiel 4

Prepregkombinationen gemäß der Beispiele 1, 2 und 3 werden zur Herstellung von Sandwichbauteilen auf Aluminiumwaben appliziert und zu rauchgasarmen und wasserbeständigen Kernverbundbauteilen verpreßt. Die Messung der Rauchgasdichte erfolgt nach ATS 1000.001 und ergibt folgende Werte:

| Rauchgasdichten DS | | |
|---|---|---|
| Messung | coverpreßte Verbundlaminate | Vergleich: konventionelles, reines Epoxidharzlaminat |
| nach 1,5 min | 30 | 250 - 300 |
| nach 4 min | 130 | 500 - 600 |

**Patentansprüche**

**1.** Verbundwerkstoffe, hergestellt durch Verpressen mehrlagiger duroplastischer Prepregs, aus mit duroplastischen Harzsystemen imprägnierten Verstärkungsmaterialien, dadurch gekennzeichnet, daß ein oder mehrere Epoxidharzprepregs mit einem oder mehreren Novolakprepregs miteinander verpreßt sind.

**2.** Verbundwerkstoffe nach Anspruch 1, bei denen ein oder mehrere Epoxidharzprepregs zwischen Novolakprepregs verpreßt sind.

**3.** Verbundwerkstoffe nach den Ansprüchen 1 und 2, dadurch gekennzeichnet, daß die Epoxidharz- und/oder Novolakharzsysteme mit 2 bis 20 Gew.-% verträglicher Kautschuke oder thermoplastischen Polymeren modifiziert sind.

**4.** Verbundwerkstoffe nach den Ansprüchen 1 bis 3, dadurch gekennzeichnet, daß die Novolakharzsysteme Hexamethylentetramin oder Umsetzungsprodukte aus Formaldehyd und Stickstoffbasen als Härter enthalten.

**5.** Verbundwerkstoffe nach den Ansprüchen 1 bis 4, dadurch gekennzeichnet, daß sie als Novolakharze Novolake mit einem Molekulargewicht von 300 bis 1000 enthalten.

**6.** Verfahren zur Herstellung von Verbundwerkstoffen gemäß der Ansprüche 1 bis 5, dadurch gekennzeichnet, daß ein oder mehrere Epoxidharzprepregs mit einem oder mehreren modifizierten oder unmodifizierten Novolakprepregs bei einer Temperatur oberhalb der Härtungstemperaturen des Epoxidharz- und des Novolakharzsystems miteinander verpreßt werden.

**7.** Verfahren nach Anspruch 6, dadurch gekennzeichnet, daß das Verpressung im Bereich von 80 bis 250 ° C erfolgt.

**8.** Verwendung der Verbundwerkstoffe nach den Ansprüchen 1 bis 5 als Bauteile für die Luft- und Raumfahrt-, Automobil- und Transportmittelbau-Industrie.

**9.** Verwendung der Verbundwerkstoffe nach den Ansprüchen 1 bis 5 in Kombination mit Leichtbauwerkstoffen zur Herstellung von Verbundbauteilen für die Luft- und Raumfahrt-, Automobil- und Transportmittelbau-Industrie.

## Claims

**1.** Composite materials, produced by pressing multiple-layer duroplastic pre-pregs, from reinforcement materials impregnated with duroplastic resin systems, characterized in that one or more epoxy resin prepregs is or are pressed together with one or more novolak prepregs.

**2.** Composite materials according to Claim 1, in which one or more epoxy resin prepregs is or are pressed between novolak prepregs.

**3.** Composite materials according to Claims 1 and 2, characterized in that the epoxy resin and/or novolak resin systems are modified with from 2 to 20% by weight of compatible rubbers or thermoplastic polymers.

**4.** Composite materials according to Claims 1 to 3, characterized in that the novolak resin systems contain hexamethylene tetramine or reaction products of formaldehyde and nitrogen bases as hardeners.

**5.** Composite materials according to Claims 1 to 4, characterized in that they contain novolaks with a molecular weight of from 300 to 1000 as novolak resins.

**6.** A method of producing composite materials according to Claims 1 to 5, characterized in that one or more epoxy resin prepregs is or are pressed together with one or more modified or unmodified novolak prepregs at a temperature above the hardening temperatures of the epoxy resin and novolak resin systems.

**7.** A method according to Claim 6, characterized in that the pressing is carried out in the range of from 80 to 250 ° C.

**8.** Use of the composite materials according to Claims 1 to 5 as components for the aerospace, motor-car and transport construction industries.

9. Use of the composite materials according to Claims 1 to 5 in combination with light construction materials for producing composite components for the aerospace, motor-car and transport construction industries.

## Revendications

1. Matériaux composites, produits par compression de préimprégnés thermodurcissables multicouches, à partir de matières de renforcement imprégnées de systèmes de résines thermodurcissables, caractérisés en ce qu'un ou plusieurs préimprégnés à base de résine époxydique sont comprimés ensemble avec un ou plusieurs préimprégnés à base de novolaque.

2. Matériaux composites selon la revendication 1, dans lesquels un ou plusieurs préimprégnés à base de résine époxydique sont comprimés entre des préimprégnés à base de novolaque.

3. Matériaux composites selon les revendications 1 et 2, caractérisés en ce que les systèmes à base de résine époxydique et/ou de résine novolaque sont modifiés à l'aide de 2 à 20% en poids de caoutchoucs compatibles ou de polymères thermoplastiques.

4. Matériaux composites selon les revendications 1 à 3, caractérisés en ce que les systèmes à base de résine novolaque contiennent de l'hexaméthylènetétramine ou des produits de réaction de formaldéhyde et de bases azotées en tant que durcisseurs.

5. Matériaux composites selon les revendications 1 à 4, caractérisés en ce qu'ils contiennent en tant que résines de novolaque des novolaques ayant un poids moléculaire de 300 à 1000.

6. Procédé pour la fabrication de matériaux composites selon les revendications 1 à 5, caractérisé en ce qu'un ou plusieurs préimprégnés à base de résine époxydique sont comprimés ensemble avec un ou plusieurs préimprégnés à base de novolaque modifiés ou non modifiés à une température située au-dessus des températures de durcissement du système à base de résine époxydique et du système à base de résine novolaque.

7. Procédé selon la revendication 6, caractérisé en ce que la compression s'effectue dans le domaine de 80 à 250°C.

8. Utilisation des matériaux composites selon les revendications 1 à 5 en tant qu'éléments de construction pour l'industrie aéronautique, spatiale, automobile et des moyens de transport.

9. Utilisation des matériaux composites selon les revendications 1 à 5, en combinaison avec des matériaux de construction légers pour la fabrication d'éléments de construction composites destinés à l'industrie aéronautique et spatiale, automobile et des moyens de transport.